# EUROPÄISCHE PATENTANMELDUNG

(11) **EP 1 614 864 A1**
(43) Veröffentlichungstag der Anmeldung: **11.01.2006**
(21) Anmeldenummer: 04016243.0
(22) Anmeldetag: 09.07.2004
(51) Int. Cl.: F01D 21/00, G01J 5/00, G01N 21/956, G01N 25/72, G06T 7/00

(54) **Verfahren zur Überwachung einer temperaturbeanspruchten Maschinenkomponente und Vorrichtung zur Überwachung einer Turbinenschaufel oder Turbinenschaufelreihe**

(71) Anmelder: SIEMENS AKTIENGESELLSCHAFT, 80333 München (DE)
(72) Erfinder: Lüttenberg, Andreas, 45289 Essen (DE)

(57) **Zusammenfassung**

Bei einem erfindungsgemäßen Verfahren ist die Ermittlung einer Wärmeverteilung auf der Maschinenkomponente vorgesehen.

Eine erfindungsgemäße Vorrichtung (1) weist mindestens einen thermo-optischen Sensor (5) zur Aufnahme eines Wärmebilds (7) der Beschichtung (9) einer beschichteten Turbinenschaufel (3) auf.

## Beschreibung

Verfahren zur Überwachung einer temperaturbeanspruchten Maschinenkomponente und Vorrichtung zur Überwachung einer Turbinenschaufel oder Turbinenschaufelreihe

Die Erfindung betrifft ein Verfahren zur Überwachung einer temperaturbeanspruchten Maschinenkomponente sowie eine Vorrichtung zur Überwachung mindestens einer beschichteten Turbinenschaufel oder Turbinenschaufelreihe.

Viele bekannte Maschinen sind während ihres Betriebs einem heißen Antriebsgas ausgesetzt. Beispielsweise werden die Turbinenschaufeln einer Gasturbine von in einer Brennkammer erzeugtem Heißgas angeströmt, wobei die im Heißgas enthaltene Energie in Rotationsenergie umgewandelt wird, um einen Generator anzutreiben.

Dabei werden die Turbinenschaufeln aufgrund der sehr hohen Temperaturen des Heißgases sehr stark beansprucht.

Die Turbinenschaufeln können beispielsweise aus einer Superlegierung auf Nickel-Kobalt-Basis hergestellt und mit einer Oxidationsschutzschicht überzogen sein. Zum Schutz gegen die extremen Temperaturen weisen die Turbinenschaufeln meist noch eine zusätzliche Beschichtung auf, nämlich eine keramische Wärmedämmschicht.

Der Zustand dieser Beschichtung hat unmittelbaren Einfluss auf den Betrieb der Turbine; eine Beschädigung dieser Beschichtung - auch wenn der Schaden lokal begrenzt ist - führt meist unweigerlich zur Zerstörung mindestens einer Schaufel und damit oft zum Stillstand der Turbine. Des Weiteren können Schäden an den Turbinenschaufeln umfangreiche Folgeschäden an der gesamten Turbine verursachen.

Deshalb ist bei bekannten Turbinen meist eine planmäßige, zyklische Wartung vorgesehen, bei welcher die Turbine außer Betrieb genommen und eine Demontage soweit wie erforderlich vorgenommen wird, um den Zustand der Turbinenschaufeln und insbesondere deren keramischer Beschichtung mittels einer Sichtprüfung zu begutachten.

Derartige bekannte Wartungsmaßnahmen sind sehr kostenintensiv, da die Turbine hierzu außer Betrieb genommen werden muss und daher während der Durchführung der Wartungsarbeiten keine Energieerzeugung stattfinden kann. Darüber hinaus kann eine planmäßige Wartung überflüssig sein, wenn sich beispielsweise herausstellt, dass die Turbinenschaufeln und deren Beschichtung keinerlei Schäden aufweisen. Umgekehrt kann es auch sein, dass zum Zeitpunkt der Wartungsmaßnahme bereits eine fortgeschrittene Schädigung vorliegt, deren Ausmaß hätte verringert werden können, wenn sie früher erkannt worden wäre.

Der Erfindung liegt daher die Aufgabe zugrunde, ein verbessertes Verfahren zur Überwachung einer temperaturbeanspruchten Maschinenkomponente sowie eine Vorrichtung zur Überwachung mindestens einer beschichteten Turbinenschaufel oder Turbinenschaufelreihe anzugeben, mittels welcher insbesondere die vorgenannten Nachteile überwunden werden können.

Bezüglich des Verfahrens wird die Aufgabe erfindungsgemäß gelöst durch ein Verfahren zur Überwachung einer temperaturbeanspruchten Maschinenkomponente, wobei während des Betriebs der Maschine eine aktuelle Wärmeverteilung auf der Maschinenkomponente ermittelt wird.

Die Erfindung geht dabei von der Überlegung aus, dass eine Früherkennung von Überhitzungen der Maschinenkomponente während des Betriebs dazu beitragen kann, Beschädigungen der Maschinenkomponente im Vorfeld zu vermeiden. Des Weiteren ist bei einem erfindungsgemäßen Verfahren kein Stillsetzen der Maschine erforderlich, um eine Wartungsmaßnahme vorzunehmen.

Übermäßig heiße Zonen in der Wärmeverteilung deuten beispielsweise auf einen Bereich insbesondere auf der Oberfläche der Maschinenkomponente hin, welcher eine Beschädigung aufweisen könnte, z.B. auf eine zumindest teilweise zerstörte Wärmedämmschicht.

Vorteilhaft wird daher aufgrund der Wärmeverteilung auf einen Fehlerort an der Maschine geschlossen.

Turbinen zur Erzeugung von elektrischer Energie sind besonders stark temperaturbeanspruchte Maschinen; daher ist in einer besonders vorteilhaften Ausgestaltung der Erfindung die Maschine eine Turbine und die Maschinenkomponente ist mindestens eine Turbinenschaufel oder Turbinenschaufelreihe.

Bei dieser Ausführungsform wird die Wärmeverteilung auf der Turbinenschaufel ermittelt und aufgrund dieser aktuellen Wärmeverteilung darauf geschlossen, ob eine Beschädigung der Turbinenschaufel vorliegt oder nicht. Diese Untersuchung kann im Gegensatz zu bekannten Verfahren während des Betriebs der Turbine stattfinden und während dieses Betriebs beliebig oft wiederholt und beispielsweise aufgezeichnet werden.

In einer weiteren vorteilhaften Ausgestaltung wird die Wärmeverteilung mit einer Referenzwärmeverteilung verglichen.

Eine Referenzwärmeverteilung ist dabei beispielsweise in einem Rechner gespeichert und bezieht sich auf die sich während eines Normalbetriebs einstellende Wärmeverteilung auf der Maschinenkomponente.

Eine Abweichung der aktuellen Wärmeverteilung von der Referenzwärmeverteilung ist dann ein Hinweis auf einen möglicherweise vorliegenden Schaden der Turbinenkomponente oder auf einen sich anbahnenden Schaden, wodurch in Art einer Früherkennung eine größere Beschädigung der Maschinenkomponente verhindert werden kann.

Stark temperaturbeanspruchte Maschinenkomponenten sollten neben ihrer Herstellung aus einem hochtemperaturfesten Material insbesondere an ihrer den extremen Temperaturverhältnissen zugewandten Oberfläche zusätzlich geschützt sein. Daher weist die Maschinenkomponente besonders bevorzugt eine Beschichtung auf und die Ermittlung der Wärmeverteilung bezieht sich auf diese Beschichtung.

Die Beschichtung realisiert dabei insbesondere eine Wärmedämmschicht gegen den extremen Temperatureinfluss. Beispielsweise sind, wie bereits erwähnt, die Turbinenschaufeln von Gasturbinen mit einer keramischen Wärmedämmschicht versehen. Da diese Beschichtung den Einflüssen des heißen Antriebsgases am stärksten ausgesetzt ist und als erste Auswirkung des extremen Temperatureinflusses eine Beschädigung der Beschichtung zu erwarten ist, wird bei dieser Ausführungsform die Wärmeverteilung auf der Beschichtung überwacht.

Zur Ermittlung der Wärmeverteilung kann eine Anzahl an Temperatursensoren vorgesehen sein.

Alternativ oder in Ergänzung kann die Wärmeverteilung mittels mindestens eines thermo-optischen Sensors ermittelt werden.

Ein thermo-optischer Sensors soll dabei solche Sensoren umfassen, mittels welcher eine graphische, mindestens zweidimensionale Darstellung der Wärmeverteilung ermittelbar ist, wobei Zonen unterschiedlicher Temperatur beispielsweise durch unterschiedliche Farben kenntlich gemacht werden.

Bevorzugt ist der thermo-optische Sensor eine Kamera.

So genannte Wärmekameras enthalten temperatursensible Sensoren, wobei ähnlich wie bei bekannten optischen Kameras ein Bild erzeugt wird, welches die Verteilung der Temperatur auf der Oberfläche des aufgenommenen Objekts zeigt.

Der Kamera kann dabei mindestens ein optisches Filter vorgeschaltet sein, um beispielsweise gezielt bestimmte Wellenlängen in der Wärmestrahlung detektieren zu können.

Z. B. kann eine sich anbahnende Beschädigung einer Turbinenschaufelbeschichtung einen kurzzeitigen und extremen Temperaturanstieg in einem lokalen Bereich der Schaufel verursachen, was sich in einer besonders starken Ausbildung hinsichtlich der Intensität einer bestimmten Wellenlänge in der Wärmestrahlung der Turbinenschaufelbeschichtung äußern kann. Eine gezielte Überwachung und Detektierung dieser Wellenlänge kann im Idealfall eine sich anbahnende Beschädigung bereits in deren Anfangsstadium ermöglichen.

Bevorzugt ist die Wärmeverteilung ein mittels des thermo-optischen Sensors aufgenommenes Wärmebild.

Ein Wärmebild umfasst dabei eine mindestens zweidimensionale Darstellung der Wärmeverteilung auf der Maschinenkomponente. Ein Wärmebild ist sehr übersichtlich und sowohl maschinell als auch manuell leicht auszuwerten und zu beurteilen.

Bezüglich der Vorrichtung wird die Aufgabe erfindungsgemäß gelöst durch eine Vorrichtung zur Überwachung mindestens einer beschichteten Turbinenschaufel oder Turbinenschaufelreihe mit mindestens einem thermo-optischen Sensor zur Aufnahme eines Wärmebilds der Beschichtung.

Bevorzugt weist die Vorrichtung eine Auswerteeinheit zur Ermittlung eines Fehlerorts an der Beschichtung aufgrund des Wärmebilds auf.

Eine derartige Auswerteeinheit kann beispielsweise mittels eines Rechners realisiert werden, wobei das Wärmebild eingelesen und dessen Wärmeverteilung analysiert wird. Treten beispielsweise in bestimmten Bereichen extrem heiße Temperaturen auf, so kann auf eine vorliegende Beschädigung im entsprechenden Bereich der überwachten Turbinenschaufelbeschichtung geschlossen werden.

Insbesondere zur automatischen Überwachung und Diagnose der Turbinenschaufel ist mittels der Auswerteeinheit der Fehlerort ermittelbar, indem das Wärmebild mit einem Referenzwärmebild verglichen wird.

Das Referenzwärmebild ist hierbei beispielsweise ein während des Normalbetriebs der Turbinenschaufel aufgenommenes Wärmebild, welches eine normale Wärmeverteilung auf der Schaufelbeschichtung zeigt.

Dieses Referenzwärmebild kann abgespeichert und während des Betriebs der Turbine jederzeit automatisch mit dem aktuell aufgenommenen Wärmebild verglichen werden. Dadurch ist eine automatisierte Überwachung und Fehlererkennung realisierbar.

Besonders bevorzugt ist der thermo-optische Sensor eine Kamera, wie beispielsweise eine bekannte Wärmekamera, mittels welcher ähnlich wie bei konventionellen optischen Kameras die Aufnahme eines mindestens zweidimensionalen Bilds eines Objekts möglich ist, wobei das Bild die Wärmeverteilung auf der Oberfläche des Objekts repräsentiert.

Im Folgenden wird ein Ausführungsbeispiel der Erfindung näher dargestellt.

Es zeigt:

FIG eine erfindungsgemäße Vorrichtung zur Überwachung von Turbinenschaufeln einer Gasturbine.

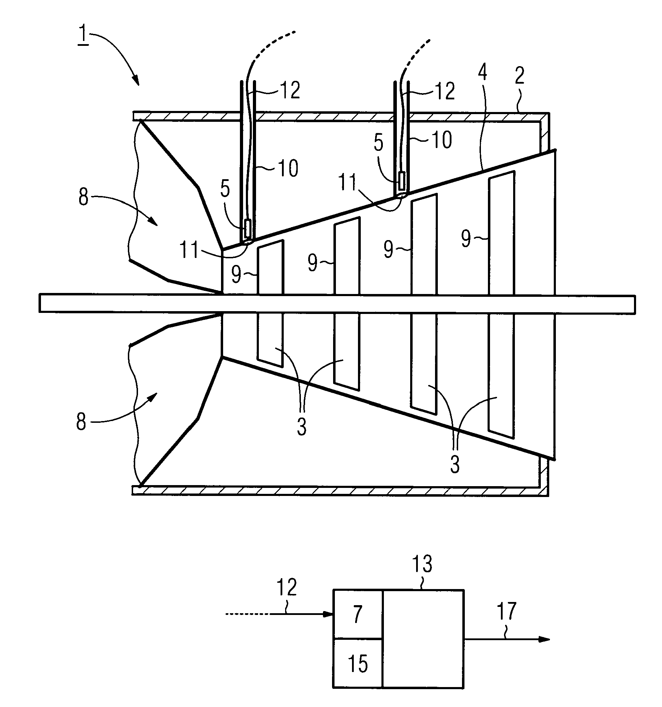

In der Figur ist eine erfindungsgemäße Vorrichtung 1 zur Überwachung von Turbinenschaufeln 3 einer Turbine 4 dargestellt.

Die Turbine 4 ist innerhalb eines Turbinengehäuses 2 angeordnet.

Die Turbine 4 ist ausgebildet als eine Gasturbine, bei welcher in einer Brennkammer 8 Heißgas als Antriebsgas für die Turbinenschaufeln 3 erzeugt wird.

Zum Schutz der Turbinenschaufeln 3 gegen die extremen Heißgastemperaturen weisen die Turbinenschaufeln 3 eine keramische Oberflächenbeschichtung 9 auf.

Bei der vorliegenden Ausführungsform werden in Heißgasrichtung gesehen die erste und die dritte Turbinenschaufelreihe überwacht.

Dazu ist jeweils mindestens ein thermo-optischer Sensor 5 vorgesehen, welcher in einem Schutzrohr 10 angeordnet ist. Um die Ausrichtung der Sensoren 5 auf die jeweilige Turbinenschaufelreihe zu ermöglichen, ist jeweils ein Schauglas 11, welches bevorzugt gekühlt wird, vorgesehen.

Die thermo-optischen Sensoren 5 sind mittels Anschlussleitungen 12 mit einer Auswerteeinheit 13 verbunden.

Die Auswerteeinheit 13 und der oder die thermo-optischen Sensoren 5 können dabei in einer Einheit, z.B. einer Wärmekamera, integriert sein.

Die Auswerteeinheit 13 ist bevorzugt mittels eines Rechners realisiert und umfasst ein abgespeichertes Referenzwärmebild 15.

Ein aktuelles Wärmebild 7, welches während des Betriebs der Gasturbine 4 mit Hilfe der thermo-optischen Sensoren 5 aufgenommen wird, wird dann mit dem Referenzwärmebild 15 verglichen, um aufgrund von ggf. vorliegenden Abweichungen zwischen diesen Bildern eine Fehlermeldung 17 zu generieren, welche einen Hinweis auf eine Beschädigung der Beschichtung 9 einer oder mehrerer Turbinenschaufeln umfasst. Des Weiteren kann diese Fehlermeldung 17 auch Informationen über den Fehlerort auf der Beschichtung 9 umfassen, da das Wärmebild 7 und das Referenzwärmebild 15 ortsaufgelöste Wärmeinformationen zur Verfügung stellen, deren Vergleich auch einen Rückschluss auf einen spezifischen Ort des Fehlers zulässt.

In vielen Fällen kann eine alleinige Auswertung des aktuellen Wärmebilds 7 ausreichend sein, um eine ungewöhnliche Wärmeverteilung auf mindestens einer Turbinenschaufel oder Turbinenschaufelreihe zu erkennen und auf eine Beschädigung zu schließen.

Ein besonderer Vorteil einer erfindungsgemäßen Vorrichtung ist darin zu sehen, dass die Überwachung während des Betriebs der Gasturbine stattfinden kann, so dass bisher übliche zyklische Wartungsintervalle überflüssig werden.

Ggf. erforderliche Wartungsmaßnahmen können losgelöst von festen Wartungszyklen bedarfsabhängig geplant werden.

## Patentansprüche

1. Verfahren zur Überwachung einer temperaturbeanspruchten Maschinenkomponente,
**dadurch gekennzeichnet, dass**
während des Betriebs der Maschine eine aktuelle Wärmeverteilung auf der Maschinenkomponente ermittelt wird.

2. Verfahren nach Anspruch 1,
**dadurch gekennzeichnet, dass**
auf Grund der Wärmeverteilung auf einen Fehlerort an der Maschinenkomponente geschlossen wird.

3. Verfahren nach Anspruch 1 oder 2,
**dadurch gekennzeichnet, dass**
Maschine eine Turbine und die Maschinenkomponente mindestens eine Turbinenschaufel (3) oder Turbinenschaufelreihe ist.

4. Verfahren nach einem der Ansprüche 1 bis 3,
**dadurch gekennzeichnet, dass**
die Wärmeverteilung mit einer Referenzwärmeverteilung verglichen wird.

5. Verfahren nach einem der Ansprüche 1 bis 4,
**dadurch gekennzeichnet, dass**
die Maschinenkomponente eine Beschichtung (9) aufweist und die Ermittlung der Wärmeverteilung sich auf diese Beschichtung (9) bezieht.

6. Verfahren nach einem der Ansprüche 1 bis 5,
**dadurch gekennzeichnet, dass**
die Wärmeverteilung mittels einer Anzahl an Temperatursensoren ermittelt wird.

7. Verfahren nach einem der Ansprüche 1 bis 6,
**dadurch gekennzeichnet, dass**
die Wärmeverteilung mittels mindestens eines thermo-optischen Sensors (5) ermittelt wird.

8. Verfahren nach Anspruch 7,
**dadurch gekennzeichnet, dass**
der thermo-optische Sensor (5) eine Kamera ist.

9. Verfahren nach Anspruch 8,
**dadurch gekennzeichnet, dass**
der Kamera mindestens ein optisches Filter vorgeschaltet ist.

10. Verfahren nach einem der Ansprüche 7 bis 9,
**dadurch gekennzeichnet, dass**
die Wärmeverteilung ein mittels des thermo-optischen Sensors (5) aufgenommenes Wärmebild (7) ist.

11. Vorrichtung (1) zur Überwachung mindestens einer beschichteten Turbinenschaufel (3) oder Turbinenschaufelreihe,
**gekennzeichnet durch**
mindestens einen thermo-optischen Sensor (5) zur Aufnahme eines Wärmebilds (7) der Beschichtung (9).

12. Vorrichtung (1) nach Anspruch 11,
**gekennzeichnet durch**
eine Auswerteeinheit (13) zur Ermittlung eines Fehlerorts (13) an der Beschichtung auf Grund des Wärmebilds (7).

13. Vorrichtung (1) nach einem der Ansprüche 11 oder 12,
**dadurch gekennzeichnet, dass**
mittels der Auswerteeinheit (11) der Fehlerort (13) durch einen Vergleich des Wärmebilds (7) mit einem Referenzwärmebild (15) ermittelbar ist.

14. Vorrichtung (1) nach einem der Ansprüche 11 bis 13,
**dadurch gekennzeichnet, dass**
der thermo-optische Sensor (5) eine Kamera ist.
